## Europäisches Patentamt

## European Patent Office

## Office européen des brevets

(19)

(11) Veröffentlichungsnummer: **0 288 790**
B1

(12)

# EUROPÄISCHE PATENTSCHRIFT

(45) Veröffentlichungstag der Patentschrift:
12.09.90

(51) Int. Cl.⁵: **C08C 2/06, C08F 6/12**

(21) Anmeldenummer: 88105495.1

(22) Anmeldetag: 07.04.88

(54) Verfahren und Vorrichtung zum kontinuierlichen Gewinnen von organischen Polymerisaten aus ihren Lösungen oder Emulsionen.

(30) Priorität: 15.04.87 DE 3712798

(43) Veröffentlichungstag der Anmeldung:
02.11.88 Patentblatt 88/44

(45) Bekanntmachung des Hinweises auf die Patenterteilung:
12.09.90 Patentblatt 90/37

(84) Benannte Vertragsstaaten:
DE GB IT

(56) Entgegenhaltungen:
EP-A- 0 058 301
EP-A- 0 157 557
BE-A- 686 702
DE-A- 1 570 094
US-A- 3 320 220

(73) Patentinhaber: BAYER AG,
D-5090 Leverkusen 1 Bayerwerk(DE)

(72) Erfinder: Miß, Helmut, Dipl.-Ing., Melde 61,
D-4010 Hilden(DE)
Erfinder: Oppelt, Dieter, Dr., Luisenstrasse 23a,
D-5093 Burscheid(DE)
Erfinder: Heine, Diez, Alkenrather Strasse 15,
D-5090 Leverkusen(DE)
Erfinder: Sipos, Reinhard, Dipl.-Ing., Cranachweg 2,
D-4047 Dormagen(DE)

ACTORUM AG

## Beschreibung

Die Erfindung betrifft ein Verfahren und eine Vorrichtung zum kontinuierlichen Gewinnen von organischen Polymerisaten aus ihren Lösungen oder Emulsionen, wobei eine solche Lösung oder Emulsion in eine mit der Lösung oder Emulsion nicht mischbare, über den Siedepunkt des jeweiligen Azeotrops erwärmte, in einem Gefäß befindliche Flüssigkeit eingedüst wird und wobei konzentrisch zum Lösungs- oder Emulsionsstrahl ein Dampfstrahl zugeführt wird.

Es ist allgemein bekannt, Lösungen von Polymeren in organischen Lösungsmitteln so aufzuarbeiten, daß man solche Lösungen in eine heiße Flüssigkeit, bevorzugt in eine wäßrige Flüssigkeit, gibt, deren Temperatur über dem Siedepunkt des organischen Wasserazeotropes liegt und in der sich das Polymer nicht löst. Dabei destilliert das organische Lösungsmittel ab und das Polymer fällt aus. Es kann dann z.B. durch Filtration abgetrennt werden. Dieses Verfahren versagt bei allen Polymeren, die in Lösung oder in festem Zustand klebrige Eigenschaften haben.

Es ist (DE-AS 1 179 375 entspr. FR-PS 1 302 028) ein Verfahren zur Gewinnung von Polymonoolefinen, Polydiolefinen oder Olefinmischpolymerisaten aus ihren Lösungen in Kohlenwasserstoff bekannt, bei dem man diese Lösungen mittels gekühlter Düsen fadenförmig in den Boden einer mit Wasser von über 80°C gefüllten Kolonne einführt und die zur Wasseroberfläche aufgestiegenen, in kleine Stücke zerteilten, feinen Polymerisate abtrennt, wobei das Verfahren nur dann arbeitet, wenn der Durchmesser des Fadens bzw. der Düse, die Arbeitstemperatur, die Konsistenz der Lösung und die Austrittsgeschwindigkeit des Fadens aus der Düse während des Betriebes der Anlage exakt aufrecht erhalten werden. Da dieses sich als schwierig erweist, treten beim Betrieb leicht Störungen auf.

Insbesondere bilden sich beim Ausfall oder Rückgang der zugeführten Lösungsmenge leicht Klumpen von festem Polymerisat.

Aus BE-A 686 702 sind ein Verfahren und eine Vorrichtung fr den eingangs genannten Zweck bekannt, wobei die Polzmerlösung zusammen mit einem umgebenden Dampfstrahl aus einer Zweistoffdüse in einen Zyklon-Separator eingedüst wird. Dabei wird das Lösungsmittel verdampft und das Polymer abgeschieden, bevor es in warmes Wasser eingebracht wird.

Weiterhin wird in der DE-PS 1 570 094 (entspr. US-PS 3 553 186) ein Verfahren zur kontinuierlichen Gewinnung von organischen Polymerisaten aus ihren Lösungen oder stabilen Dispersionen in organischen Lösungsmitteln beschrieben, das dadurch gekennzeichnet ist, daß man solche Lösungen bzw. Dispersionen mit einer mit ihnen nicht mischbaren Flüssigkeit in eine instabile grobe Dispersion überführt, in der die nicht mischbare Flüssigkeit die kontinuierliche Phase ist, diese Dispersion durch eine Düse in den Boden eines Gefäßes einführt, das eine ebenfalls nicht mit der Polymerlösung oder Dispersion mischbare Flüssigkeit enthält, deren Temperatur höher liegt als die Siedetemperatur des organischen Lösungsmittels, wobei die Strömungsgeschwindigkeit der Dispersion aus der Düse in die geheizte, nicht mischbare Flüssigkeit und die Verdampfungsgeschwindigkeit des organischen Lösungsmittels durch einen ringförmig um die Düse geführten Dampfstrom geregelt wird.

Auch dieses Verfahren gewährleistet, insbesondere bei klebrigen Polymeren, keine optimale Ausfällung bzw. der Restgehalt an Lösungsmittel im Polymerisat ist noch zu hoch.

Es besteht die Aufgabe, ein Verfahren und eine Vorrichtung zum kontinuierlichen Gewinnen von organischen Polymerisaten aus ihren Lösungen und Emulsionen zu finden, welche gegen Betriebsschwankungen weniger empfindlich sind, und wobei ein geringerer Restgehalt von Lösungsmittel im Polymerisat gewährleistet ist.

Gelöst wird diese Aufgabe dadurch, daß die Lösung oder Emulsion in Form eines hohlen Strahls eingedüst wird und daß der Dampfstrahl unter einem Winkel $\alpha$ verdüst wird, welcher zwischen 1° und 90° größer ist als der Winkel $\beta$, welchen der Lösungs- oder Emulsionsstrahl mit der Düsenachse einschließt.

Dadurch wird erreicht, daß der Dampfstrahl den von ihm beim Austritt aus der Düse eingeschlossenen Lösungs- oder Emulsionsstrahl zerteilt. Dabei begünstigt die hohle Ausbildung dieses Strahls seine Zerteilung in kleinste Partikelchen, so daß eine maximale Oberfläche erzielt wird, welche eine optimale Ausdampfung des Lösungsmittels begünstigt. Es hat sich gezeigt, daß durch die besondere Art der Verdüsung Schwankungen der Betriebsgrößen, wie Arbeitstemperatur, Durchsatzmenge, Konsistenz des Lösungsmittels, Viskositätsschwankungen der Lösung oder Emulsion, soweit sie im üblichen Rahmen bleiben, die Qualität des Polymerisats kaum beeinflussen. Insbesondere wird durch die feine Zerteilung des Lösungs- oder Emulsionsstrahls die Gefahr der Bildung von Rückverklebungen des gefällten Polymerisats herabgesetzt. Die Geschwindigkeit des Dampfstrahls im Austrittsquerschnitt läßt sich vorzugsweise von Hand auf Schall- oder Unterschallgeschwindigkeit einstellen. Gute Ergebnisse werden erzielt, wenn man den Winkel $\alpha$ im Bereich von 10°-45° und den Winkel $\beta$ im Bereich von 5° bis 15° wählt.

Das neue Verfahren kann grundsätzlich zur Abtrennung aller Polymerisate von organischen Lösungsmitteln verwendet werden, wobei die Polymerisate in diesen Lösungsmitteln gelöst oder emulgiert sein können.

Als Polymerisate kommen beispielsweise Polydiolefine bzw. deren Mischpolymerisate in Frage, wie Polybutadien, Polybutadien-Styrol, Polyisopren und die Kautschukkomponente von Acrylnitril-Butadien-Styrol-Polymerisaten. Weiterhin Polymonoolefine bzw. deren Mischpolymerisate, z.B. Butylkautschuk und auch perchlorierte Polymerisate, z.B. aus Polyethylen, Polypropylen, Ethylen-Propylen-Copolymerisaten, Polyisobutylen und Butadien-Dichlorethan-Copolymerisaten.

Lösungsmittel dieser Polymerisate und Copolymerisate sind z.B. aliphatische und aromatische Kohlenwasserstoffe sowie deren Halogenderivate, wie z.B. Hexan, Heptan, Benzol, Toluol, Tetrachlorkohlenstoff, Chloroform, Trichlorethylen, Tetrachlorethylen, Tetrachlorethan, Chlorbenzol und Dichlorbenzol.

Besonders geeignet ist diese Verdüsungsmethode zur Isolierung von Chlorkautschuk aus seinen Lösungen oder Emulsionen in organischen Lösungsmitteln, besonders in Tetrachlorkohlenstoff oder Toluol. Beispielsweise kann der Chlorkautschuk in einer Lösung in Tetrachlorkohlenstoff oder Toluol in Wasser einemulgiert sein.

Insbesondere eignet sich eine 5 bis 40 Gew.-%ige Lösung oder Emulsion aus Chlorkautschuk in Toluol mit Wasser. Dabei sollte die Wandstärke des eingedüsten hohlen Strahls vorzugsweise zwischen 0,1 bis 5 mm betragen, weil in diesem Bereich eine besonders gute Zerteilung des Strahls durch den Dampfstrahl gewährleistet ist. Dabei wird das Lösungsmittel bis auf einen Restgehalt von etwa nur 1 bis 5 Gew.-% verdampft. Die Chlorkautschuklösung oder Emulsion sollte bei der Verdüsung eine Temperatur von 20 bis 85°C aufweisen. Wasserdampf und Polymerlösung bzw. Emulsion werden im Massenverhältnis von 1:3 bis 5:1 zugeführt. Als Flüssigkeit zum Fällen wird in aller Regel Wasser mit einer Temperatur von 70 bis 120°C benutzt, wobei der entsprechende Raum unter Atmosphärendruck oder Überdruck stehen kann. Es versteht sich, daß die Lösung unter einem solchen Vordruck zugeführt werden muß, daß das Lösungsmittel nicht vorzeitig verdampft.

Vorzugsweise wird der hohle Strahl aus Lösung oder Emulsion mit einer Wandstärke von 0,1 bis 5 mm eingedüst.

Die Wahl der Wandstärke ist abhängig von der jeweiligen Viskosität der Lösung oder Emulsion, dem vorliegenden Arbeitsdruck sowie den gewünschten Produkteigenschaften.

Gemäß einer besonderen Durchführungsform des Verfahrens wird die Austrittsgeschwindigkeit des hohlen Strahls aus Lösung oder Emulsion unter Konstanthaltung des Vordruckes geregelt.

Durch Veränderung der Austrittsgeschwindigkeit, insbesondere durch Veränderung der Wandstärke des Lösungs- oder Emulsionsstrahls, lassen sich Betriebsgrößenschwankungen kompensieren, so daß auch bei schwierig verarbeitbaren Lösungen oder Emulsionen optimale Ergebnisse erzielbar sind.

Die neue Vorrichtung zum kontinuierlichen Gewinnen von organischen Polymerisaten aus ihren Lösungen oder Emulsionen geht aus von einem Gefäß für eine Flüssigkeit, in welche eine Mehrstoffdüse hineinragt, welche einen zentrischen Kanal für die Lösung oder Emulsion und einen konzentrischen Kanal für Dampf aufweist.

Das Neue ist in einer Zweistoffdüse zu sehen, deren beide Kanäle durch eine Hülse voneinander getrennt sind und in deren innerem Kanal eine verschiebbare Düsennadel zentrisch angeordnet ist, wobei die Mündung des inneren Kanals als Regelstrecke ausgebildet ist und mit der Düsenachse einen Winkel β einschließt, während die Mündung des äußeren Kanals mit der Düsenachse einen Winkel α bildet, welcher zwischen 1° und 90° größer ist als der Winkel β.

Grundsätzlich ist das neue Verfahren auch mit geeigneten Zweistoffdüsen anderen Aufbaus durchführbar, allerdings unter weniger optimalen Bedingungen.

Die Ausbildung der Mündung des inneren Kanals - exakt gesagt, des Bereiches hinter der eigentlichen Mündung - als Regelstrecke ist nicht nur für die Verwendung der Vorrichtung für das Verdüsen verschiedenartiger Lösungen oder Emulsionen günstig, sondern auch während des Betriebes lassen sich mittels dieser Regelstrecke Betriebsschwankungen kompensieren. Infolge der guten Regelbarkeit der Wandstärke des hohlen Lösungs- oder Emulsionsstrahls läßt sich auch die Bildung von Rückverklebungen des gefällten Polymerisats vermeiden.

Eine besonders günstige Ausgestaltung der Regelstrecke besteht darin, daß sie in Verdüsungsrichtung sich konisch verjüngend gestaltet ist, indem in diesem Bereich die Innenwandung der Hülse und die Spitze der Düsennadel kegelige Flächen aufweisen, welche vorzugsweise unter dem gleichen Winkel zur Düsenachse verlaufen.

Vorzugsweise ist die neue Vorrichtung durch einen Verschlußsitz zwischen Düsennadel und Hülse gekennzeichnet.

Auf diese Weise läßt sich die Verdüsung der Lösung oder Emulsion erforderlichenfalls unterbrechen und bei Betriebsstörungen das Eindringen der im Gefäß befindlichen Flüssigkeit in den inneren Kanal verhindern.

In besonders vorteilhafter Weise ist die Regelstrecke gleichzeitig als Verschlußsitz ausgebildet. Dies ist besonders dann von Vorteil, wenn die konischen Begrenzungsflächen unter dem gleichen Winkel der Düsenachse verlaufen. In diesem Falle bilden nämlich die Begrenzungsflächen selbst die Dichtflächen. Selbstverständlich können auch besondere Dichtflächen an der Innenwandung der Hülse und an der Düsennadel für den Verschlußsitz vorgesehen sein.

Vom Prinzip her läßt sich die Regelung bei einiger Erfahrung auch von Hand durchführen.

Vorzugsweise ist jedoch ein Regelkreis vorgesehen, bestehend aus einem in der Zuführung für die Lösung oder Emulsion angeordneten Druckfühler, welcher über eine Impulsleitung mit einem Regler mit Meßwertwandler verbunden ist, welcher seinerseits über eine Impulsleitung mit einem der Düsennadel zugeordneten Stellantrieb verbunden ist.

Weicht der gemessene Druckwert von dem im Regler eingespeicherten Sollwert ab, so gibt der Regler an den Stellantrieb Befehl, die Düsennadel entsprechend im Sinne der Konstanthaltung des Vordruckes zu verstellen.

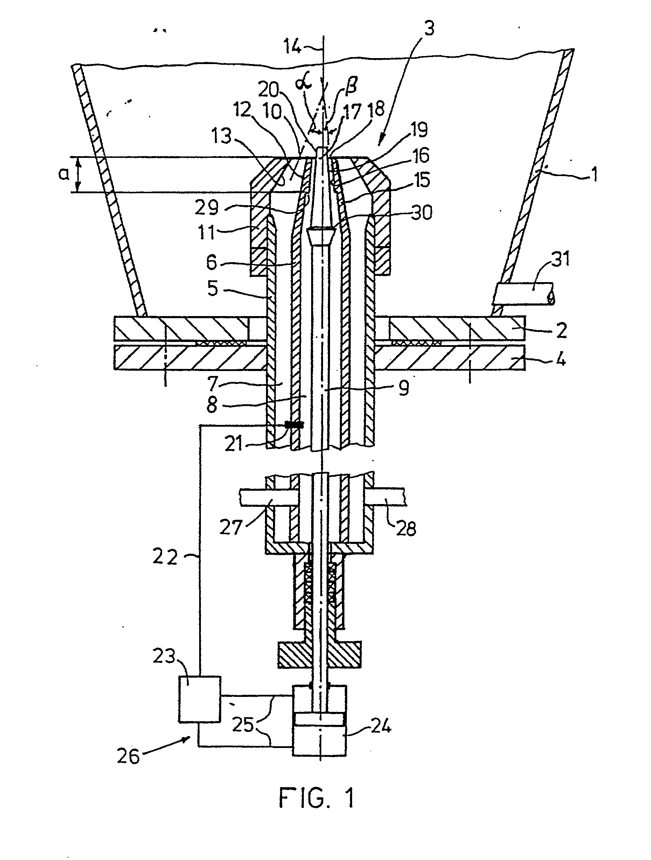

In der Zeichnung ist die neue Vorrichtung in einem Ausführungsbeispiel rein schematisch im Querschnitt dargestellt und nachstehend näher beschrieben:

In ein angedeutetes Gefäß 1 ragt von unten durch dessen Boden 2 eine Zweistoffdüse 3, welche mittels eines Flansches 4 mit dem Boden 2 abdichtend verschraubt ist. Die Zweistoffdüse besteht aus einem äußeren Mantel 5 und einer inneren Hülse 6, einem dazwischen liegenden äußeren Kanal 7 sowie einem inneren Kanal 8, in welchem eine Düsennadel 9 zentrisch und verschiebbar angeordnet ist. Die Mündung 10 des äußeren Kanals 7 ist durch eine am Mantel 5 gehaltene Kappe 11 und die Hülse 6 gebildet, welche beide konische Flächen 12, 13 unterschiedlichen Winkels aufweisen. Dadurch ergibt sich ein Verdüsungswinkel $\alpha$ von 20° mit der Düsenachse 14. Die Hülse 6 läuft in einen Hohlkegelstumpf 15 aus, welcher austauschbar ist. Seine innenseitige Begrenzungsfläche 16 bildet mit der kegelstumpfförmigen Spitze 17 der Düsennadel 9 die Mündung 18 mit einer Regelstrecke 19 von der Länge a in Form eines konischen Ringspaltes, dessen Dicke durch Verstellen der Düsennadel 9 veränderbar ist. Die Begrenzungsfläche 16 und die Mantelfläche 20 der Spitze 17 schließen mit der Düsenachse 14 jeweils einen Winkel $\beta$ von 10° ein, so daß auch der Verdüsungswinkel dem Winkel $\beta$ entspricht. In den inneren Kanal 8 ragt ein Druckmeßfühler 21 hinein, welcher die Meßwerte über eine Impulsleitung 22 einem Regler 23 mit integriertem Meßwertwandler mitteilt. Dieser betätigt dann den Stellantrieb 24 über Impulsleitungen 25 im Sinne einer Konstanthaltung des Vordruckes im Kanal 8. Dieser gesamte Regelkreis ist mit 26 beziffert. Zuleitungen für die Kanäle 7 und 8 sind mit 28 und 27 bezeichnet. Die Düsennadel 9 weist mit der Hülse 6 einen gesonderten Verschlußsitz auf, welcher durch Dichtflächen 29 und 30 gebildet ist. Durch einen Einlaß 31 gelangt Wasser in das Gefäß 1.

Verfahrensbeispiel

Verwendet wird die Vorrichtung gemäß Zeichnung.

Das Gefäß 1 besitzt ein Volumen von 0,7 m³. Es ist mit 99° heißem Wasser gefüllt. Über die Zuleitung 27 wird dem Kanal 8 der Zweistoffdüse 3 20 Gew.-%ige, auf 85°C erhitzte Chlorkautschukemulsion in einer Menge von 500 kg/h zugeführt. Sie tritt als hohler Strahl mit einer Wandstärke von 1,0 mm aus der Mündung 18 aus. Der mittlere Verdüsungswinkel $\beta$, bezogen auf die Düsenachse 14, beträgt dabei 10°. Der Wasserdampf wird bei 150° in einer Menge von 300 kg/h durch die Mündung 10 unter einem Winkel $\alpha$ von 20° verdüst. Dabei reißt der Dampfstrahl den Lösungsstrahl auf, so daß viele kleine Partikelchen entstehen, welche im Wasser aufsteigen und von der Oberfläche abgezogen werden können. Im inneren Kanal 8, durch welchen die Lösung geführt wird, herrscht ein Vordruck von 8 bar. Der Regelkreis 26 arbeitet derart, daß bei irgendwelchen Betriebsschwankungen durch Verstellen der Düsennadel 9 in der Regelstrecke 12 der Durchströmquerschnitt im Sinne einer Veränderung der Austrittsgeschwindigkeit zur Konstanthaltung des Vordruckes geändert wird.

**Patentansprüche**

1. Verfahren zum kontinuierlichen Gewinnen von organischen Polymerisaten aus ihren Lösungen oder Emulsionen, indem eine solche Lösung oder Emulsion zusammen mit einem konzentrischen Dampfstrahl verdüst wird, wobei der Dampfstrahl unter einem Winkel $\alpha$ und der Lösungs- oder Emulsionsstrahl unter einem Winkel $\beta$ mit der Düsenachse verdüst werden, und anschließend in eine in einem Gefäß (1) befindliche warme Flüssigkeit eingebracht wird, dadurch gekennzeichnet, daß die Lösung oder Emulsion in Form eines hohlen Strahls zusammen mit dem Dampfstrahl direkt in die über dem Siedepunkt des jeweiligen Azeotrops erwärmte Flüssigkeit eingedüst wird, wobei der Winkel $(\alpha-\beta)$ zwischen 1 und 90° eingestellt wird.

2. Verfahren nach Anspruch 1, dadurch gekennzeichnet, daß der hohle Strahl aus Lösung oder Emulsion mit einer Wandstärke von 0,1 bis 5 mm eingedüst wird.

3. Verfahren nach Anspruch 1 oder 2, dadurch gekennzeichnet, daß die Austrittsgeschwindigkeit des hohlen Strahls aus Lösung bzw. Emulsion unter Konstanthaltung des Vordruckes geregelt wird.

4. Vorrichtung zum kontinuierlichen Gewinnen von organischen Polymerisaten aus ihren Lösungen oder Emulsionen, bestehend aus einem Gefäß (1) für eine Flüssigkeit, welchem eine Zweistoffdüse (3) zugeordnet ist, deren beide Kanäle (7, 8) durch eine Hülse (6) voneinander getrennt sind und in deren innerem Kanal (8) eine verschiebbare Düsennadel (9) zentrisch angeordnet ist, wobei die Mündung (10) des äußeren Kanals (7) mit der Düsenachse (14) einen Winkel $\alpha$ bildet, welcher zwischen 1° und 90° größer ist als der Winkel $\beta$, welchen der innere Kanal (8) mit der Düsenachse (14) einschließt, dadurch gekennzeichnet, daß die Zweistoffdüse (3) mit ihnen Mündungen (10, 18) in das Gefäß (1) hineinragt und daß die Mündung (18) des inneren Kanals (8) als Regelstrecke (19) ausgebildet ist.

5. Vorrichtung nach Anspruch 4, gekennzeichnet durch eine kegelförmig ausgebildete Regelstrecke (19).

6. Vorrichtung nach Anspruch 4, gekennzeichnet durch einen Verschlußsitz (29, 30) zwischen Düsennadel (9) und Hülse (6).

7. Vorrichtung nach einem der Ansprüche 4 bis 6, dadurch gekennzeichnet, daß die Regelstrecke (19) gleichzeitig als Verschlußsitz ausgebildet ist.

8. Vorrichtung nach einem der Ansprüche 4 bis 7, gekennzeichnet durch einen Regelkreis (26), bestehend aus einem in der Zuführung (8) für die Lösung oder Emulsion angeordneten Druckmeßfühler (21), welcher über eine Impulsleitung (22) mit einem Regler (23) mit Meßwertwandler verbunden ist, welcher seinerseits über Impulsleitungen (25) mit einem der Düsennadel (9) zugeordneten Stellantrieb (24) verbunden ist.

**Claims**

1. A process for the continuous recovery of organic polymers from solutions or emulsions thereof by spraying the solution or emulsion together with a concentric steam jet, the steam jet being sprayed at an angle $\alpha$ and the solution or emulsion jet being sprayed at an angle $\beta$ with the nozzle axis, and subsequently introducing the two jets into a warm liquid accommodated in a vessel (1), characterized in that the solution or emulsion is directly sprayed in the form of a hollow jet, together with the steam jet, into the liquid heated to beyond the boiling point of the particular azeotrope, the angle ($\alpha - \beta$) being adjusted to between 1 and 90°.

2. A process as claimed in claim 1, characterized in that the hollow jet of solution or emulsion is sprayed in with a wall thickness of 0.1 to 5 mm.

3. A process as claimed in claim 1 or 2, characterized in that the exit rate of the hollow jet of solution or emulsion is regulated while the system pressure is kept constant.

4. An apparatus for the continuous recovery of organic polymers from solutions or emulsions thereof, consisting of a vessel (1) for a liquid with which is associated a two-component nozzle (3) of which the two passages (7, 8) are separated from one another by a sleeve (6) and in the inner passage (8) of which a displaceable nozzle needle (9) is centrally arranged, the orifice (10) of the outer passage (7) forming with the nozzle axis (14) an angle $\alpha$ between 1° and 90° larger than the angle which the inner passage (8) forms with the nozzle axis (14), characterized in that the two-component nozzle (3) projects with its orifices (10, 18) into the vessel (1) and in that the orifice (18) of the inner passage (8) is designed as a controlled member (19).

5. An apparatus as claimed in claim 4, characterized by a conically shaped controlled member (19).

6. An apparatus as claimed in claim 4, characterized by a closure seat (29, 30) between the nozzle needle (9) and the sleeve (6).

7. An apparatus as claimed in any of claims 4 to 6, characterized in that the controlled member (19) is designed simultaneously as a closure seat.

8. An apparatus as claimed in any of claims 4 to 7, characterized by an automatic control system (26) consisting of a pressure sensor (21) which is arranged in the feed pipe (8) for the solution or emulsion and which is connected by a pulse line (22) to a controller (23) with transducer which in turn is connected by pulse lines (25) to a positioning drive (24) associated with the nozzle needle (9).

**Revendications**

1. Procédé d'obtention continue de produits de polymérisation organiques à partir de leurs solutions ou émulsions, dans lequel une telle solution ou émulsion est atomisée en même temps qu'un jet de vapeur concentrique, le jet de vapeur étant atomisé sous un angle $\alpha$ par rapport à l'axe de la buse et le jet de solution ou d'émulsion étant atomisé sous un angle $\beta$ par rapport à l'axe de la buse, puis est introduite dans un liquide chaud qui se trouve dans un récipient (1), caractérisé en ce que la solution ou émulsion est introduite par atomisation sous forme d'un jet creux en même temps que le jet de vapeur directement dans le liquide chauffé au-dessus du point d'ébullition de l'azéotrope respectif, l'angle ($\alpha - \beta$) étant réglé à une valeur comprise entre 1 et 90°.

2. Procédé selon la revendication 1, caractérisé en ce que le jet creux de solution ou d'émulsion est introduit par atomisation avec une épaisseur de paroi de 0,1 à 5 mm.

3. Procédé selon la revendication 1 ou 2, caractérisé en ce que la vitesse de sortie du jet creux de solution ou d'émulsion est réglée tandis que la pression d'admission est maintenue constante.

4. Dispositif d'obtention continue de produits de polymérisation organiques à partir de leurs solutions ou émulsions, consistant en un récipient (1) pour un liquide, auquel est associée une buse à deux constituants (3) dont les deux canaux (7, 8) sont séparés l'un de l'autre par une gaine (6) et dans le canal interne (8) de laquelle est disposée de façon centrée une aiguille de buse (9) déplaçable, l'embouchure (10) du canal externe (7) formant avec l'axe (14) de la buse un angle a qui est supérieur de 1 à 90° à l'angle $\beta$ défini entre le canal interne (8) et l'axe (14) de la buse, caractérisé en ce que la buse à deux constituants (3) fait saillie dans le récipient (1) par ses embouchures (10, 18) et en ce que l'embouchure (18) du canal interne (8) est sous forme d'un segment de réglage (19).

5. Dispositif selon la revendication 4, caractérisé par un segment de réglage (19) conique.

6. Dispositif selon la revendication 4, caractérisé par un siège d'obturation (29, 30) entre l'aiguille (9) de la buse et la gaine (6).

7. Dispositif selon l'une des revendications 4 à 6, caractérisé en ce que le segment de réglage (19) constitue en même temps un siège d'obturation.

8. Dispositif selon l'une des revendications 4 à 7, caractérisé par un circuit de régulation (26) consistant en un capteur de pression (21) disposé dans la conduite d'amenée (8) pour la solution ou l'émulsion, qui est relié par l'intermédiaire d'une ligne d'impulsions (22) à un régulateur (23) avec convertisseur lequel est relié pour sa part par l'intermédiaire de lignes d'impulsions (25) à un vérin (24) associé à l'aiguille (9) de la buse.

FIG. 1